# EUROPÄISCHE PATENTSCHRIFT

(11) **EP 0 451 110 B1**
(45) Veröffentlichungstag und Bekanntmachung des Hinweises auf die Patenterteilung: **17.05.1995**
(21) Anmeldenummer: 91810237.7
(22) Anmeldetag: 03.04.1991
(51) Int. Cl.: H02J 9/06, H02H 3/08

(54) **Vorrichtung zum Abschalten von im Notstrombetrieb befindlichen elektrischen Verbrauchern bei Auftreten eines Kurzschlusses**
Device for disconnection of loads powered by an uninterruptible power supply when a short-circuit occurs
Dispositif pour déconnecter en cas de court-circuit des charges alimentées par une alimentation de secours

(30) Priorität: 05.04.1990 CH 1157/90
(43) Veröffentlichungstag der Anmeldung: 09.10.1991
(73) Patentinhaber: ALMAT, Bruno Kessler, CH-8610 Uster (CH)
(72) Erfinder: Kessler, Bruno, CH-8610 Uster (CH); Steiger, Willi, CH-8575 Bürglen/TG (CH)
(74) Vertreter: Bosshard, Ernst

(56) Entgegenhaltungen:
- DE-A- 3 127 460
- DE-C- 3 519 151
- DE-C- 3 612 621

## Beschreibung

Die Erfindung betrifft eine Vorrichtung zum Abschalten von im Notstrombetrieb befindlichen elektrischen Verbrauchern bei Auftreten eines Kurzschlusses. Eine solche Vorrichtung ist aus der DE-A-3127460 bekannt.

Für spezielle elektrische Verbraucher wird eine möglichst unterbrechungslose Stromversorgung verlangt. Solche Verbraucher könnten sein: Beleuchtungsanlagen für Komfort und Sicherheit in Geschäftshäusern, Banken, öffentlichen Gebäuden, Hotels, Spitäler, Alters- und Pflegeheimen, Tiefgaragen, Einkaufszentren usw., und Förder- bzw. Dosierpumpen in Geräten für lebenserhaltende Massnahmen im medizinischen Bereich. In den bekannten Anlagen werden besondere Vorkehrungen getroffen zur möglichst unterbrechungslosen Stromversorgung bei Ausfall des öffentlichen Stromnetzes oder bei Ausfall eines Verbrauchers durch Kurzschluss. Zu diesem Zweck sind die bekannten Anlagen mit mindestens einem Notstromagregat ausgerüstet, das zum Beispiel aus einem Antriebsmotor mit Generator oder durch Gleichrichter aufgeladene Batterien mit Wechselrichter für die Versorgung der Verbraucher beispielsweise über ein Notstromnetz bestehen kann. Die bekannten Notstromagregate funktionieren gut, haben aber den Nachteil, dass bei einem Kurzschluss, der während der Notstromversorgung in einem der Verbraucher auftritt, die Versorgung für sämtliche Verbraucher infolge Ueberbelastung ausfallen kann, sodass der Notstrombetrieb gesamthaft zusammenbricht, wodurch gravierende Probleme im Sicherheitsbereich und bei den lebenserhaltenden Massnahmen entstehen können.

Die Erfindung hat die Aufgabe, diesen Nachteil zu beseitigen sowie eine erweiterte Betriebssicherheit namentlich bei Beleuchtungsanlagen und Geräten im medizinischen Bereich zu schaffen.

Diese Aufgabe wird durch die Merkmale des kennzeichnenden Teils des Patentanspruches 1 gelöst.

Es zeigen:
Fig. 1 ein erstes Ausführungsbeispiel der Erfindung
Fig. 2 ein zweites Ausführungsbeispiel der Erfindung

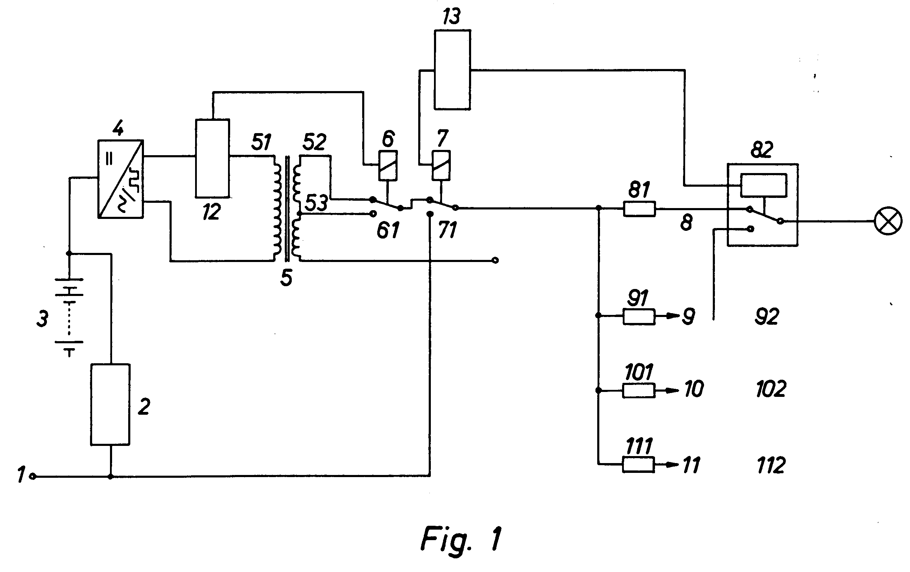

Die Figur 1 zeigt die elektrische Schaltung einer Anlage mit einer Vielzahl von Verbrauchern, welche zu Gruppen zusammengeschaltet sind. Die Anlage hat eine Stromversorgung 1, normalerweise aus dem öffentlichen Netz, und ein Notstromagregat, das aus einem Gleichrichter 2, mehreren Batterien 3 und einem Wechselrichter 4 besteht. Diese Batterien werden während der normalen Stromversorgung aufgeladen und im aufgeladenen Zustand gehalten. Der Wechselrichter 4 übernimmt die Stromversorgung unterbrechungslos bei einer Spannungsabsenkung oder bei einem Ausfall des öffentlichen Netzes 1. Die Figur 1 zeigt diesen Zustand der Notstromversorgung der Verbrauchergruppen 8, 9, 10, 11 durch den Wechselrichter 4 über den Transformator 5 und Kontakte 61 und 71 der elektromagnetischen Relais 6 und 7. Am Eingang einer jeden Verbrauchergruppe sind eine Sicherung 81, 91, 101, 111 und eine Ueberwachungslogik 82, 92, 102, 112 vorgesehen. Die Ueberwachungslogik gibt bei Auftreten einer Spannungsabsenkung oder eines Ausfalls des öffentlichen Netzes ein Steuersignal auf die Steuerung 13, welche bewirkt, dass das Relais 7 erregt wird, sodass der Arbeitsschalter 71 in die gezeichnete Stellung bewegt wird. Hierdurch werden die Verbrauchergruppen 8, 9, 10, 11 über den Ruhekontakt 61 (gezeichnete Stellung) des nichterregten Relais 6 und über den Transformator 5 an die Notstromversorgung des Wechselrichters 4 gelegt. Wenn nun während des Notstrombetriebes bei irgend einem Verbraucher in einer der Verbrauchergruppen 8-11 ein Kurzschluss entsteht, erhöht sich der Strom in dieser Gruppe, der aber besonders bei Verbrauchern mit kleinem Anschlusswert nicht genügt, die Sicherung der betreffenden Verbrauchergruppe plötzlich aufzutrennen und diese Verbrauchergruppe von der Notstromversorgung sofort abzuschalten, um das Notstromagregat (Wechselrichter 4) zu schonen und vor dem Ausschalten für sämtliche Verbrauchergruppen zu schützen. Die Schwierigkeit des sofortigen Abschaltens vergrössert sich noch dadurch, dass die Trennorgane, welche normalerweise als Sicherungen ausgebildet sind, Ansprechwerte haben, welche in einem grösseren Toleranzbereich variieren können. Die Erfindung eliminiert dieses Problem dadurch, dass der Kurzschlussstrom, der im Sekundärkreis 52 des Transformators 5 liegt, seinen Primärkreis 51 beeinflusst. Die Stromüberwachung 12, welche im Primärkreis liegt, erkennt den erhöhten Strom und erregt das Relais 6, welches seinen Ruhekontakt 61 in die andere (nicht gezeichnete) Stellung bringt, so dass ein Mittenabgriff 53 des Transformators eingeschaltet wird, wodurch die Sekundärspannung sich erniedrigt. Dies hat zur Folge, dass der Sekundärstrom auf das 10 bis 100-fache ansteigt und über den in der gezeichneten Stellung liegenden Arbeitsschalter 71 (Relais 7 ist noch immer erregt) nur durch die Sicherung der mit einem Kurzschluss behafteten Verbrauchergruppe fliesst. Diese Sicherung bzw. dieses Trennorgan spricht durch diesen stark erhöhten Strom an und schaltet die betreffende Verbrauchergruppe von der Notstromversorgung ab. Auf diese Weise wird die Notstromversorgung für die anderen Verbrauchergruppen aufrechterhalten.

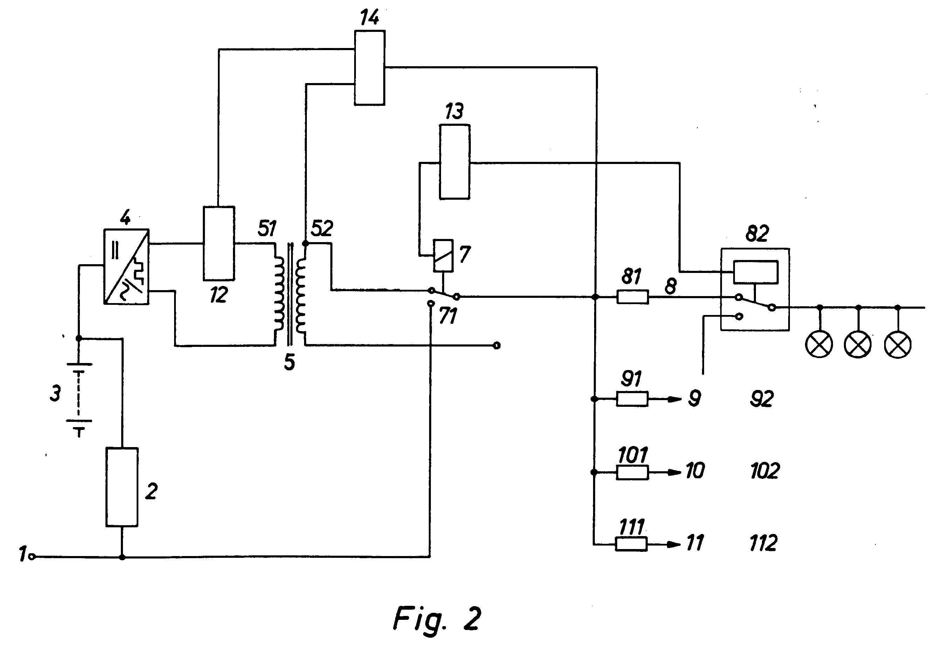

Die Figur 2 zeigt eine Alternative, welche der Erzeugung eines erhöhten Stromes dient zum Abschalten derjenigen Verbrauchergruppe, in der während des Notbetriebes ein Kurzschluss entstanden ist. Die Schaltung jeder Ueberwachungslogik 82, 92, 102, 112 und des vom Relais 7 gesteuerten Ruhekontaktes 71 befinden sich in der gezeichneten Stellung. Bei diesem Ausführungsbeispiel ist im Primärkreis 51 des Transformators 5 eine Stromüberwachung 12 und ein Ueberstromgenerator 14 angeordnet, dessen Ausgang an die Trennorgane bzw. Sicherungen 81, 91, 101, 111 der Verbrauchergruppen 8, 9, 100, 110 angeschlossen ist. Auch hier sei angenommen, dass die Verbrauchergruppen vom Notstromagregat 2, 3, 4 gespiesen werden. Tritt während des Notstrombetriebes ein Kurzschluss in irgend einem Verbraucher auf (z.B. in der Verbrauchergruppe 8), erhöht sich der Strom im Sekundärkreis 52 des Transformators 5, was eine Spannungserhöhung im Primärkreis 51 erzeugt. Die Stromüberwachung 12 spricht auf diese Spannungserhöhung an und gibt einen um das 10 bis 100-fache erhöhten Strom auf die Sicherungen 81, 91, 101, 111 ab, welcher diejenige Sicherung auftrennt, die der Verbrauchergruppe 8 mit dem Kurzschluss angehört, so dass diese Verbrauchergruppe abgeschaltet wird und der Wechselrichter 4 die übrigen Verbrauchergruppen weiterhin mit Strom versorgen kann.

Der Vollständigkeit halber sei noch erwähnt, dass die Relais 6 und 7 in den Figuren 1 und 2 durch elektronische Schalter, z.B. Thyristoren ersetzt werden kann. Solche Thyristerschaltungen sind bekannt.

Bei beiden Ausführungsbeispielen kann der Transformator 5 verwendet werden, der schon für die Aufladung der Batterien 3 durch den Gleichrichter vorhanden ist, da dieser nur während der normalen Stromversorgung durch das öffentliche Netz im Einsatz ist.

Die in den Figuren 1 und 2 gezeigten Ausführungsbeispiele benötigen lediglich einfache Bauelemente, was niedrige Herstellungskosten ergibt.

## Patentansprüche

1. Vorrichtung zum Abschalten von in Notbetrieb befindlichen Verbrauchern bzw. Verbrauchergruppen bei Auftreten eines Kurzschlusses auf der Verbraucherseite eines die Notstromversorgung durchführenden Wechselrichters, wobei zum selektiven Abschalten nur des den Kurzschluss veranlassenden Verbrauchers bzw. Verbrauchergruppe (8,9,10,11) mindestens eine Schaltungsanordnung vorgesehen ist, die folgende Bauteile enthält:
- einen Detektor (12) zum detektieren des Kurzschlusses
- ein eine Stromerhöhung erzeugendes Schaltungsmittel (6,61,53;14) und
- ein auf die Stromerhöhung ansprechendes Trennorgan (81,91,101,11) zum Abtrennen des den Kurzschluss verursachten Verbrauchers bzw. der eine kurzgeschlossenen Verbraucher aufweisenden Verbrauchergruppe, wobei ein auf der Ausgangsseite des Wechselrichters (4) vorgesehener Transformator (5) mit einem Abgriff (53) versehen ist, für eine zuschaltbare Unterspannung, die einen hohen Strom zur Betätigung des Trennorgans (81,91,101,111) erzeugt, dadurch gekennzeichnet, dass sich der Detektor (12) im Primärkreis des Transformators (5) befindet und ein vom Detektor (12) im Kurzschlussfall erregbares Relais (6) über seinen Arbeitskontakt (61) oder eine Thyristorschaltung den Abgriff (53) für die Unterspannung zuschaltet oder dass durch den Detektor (12) im Kurzschlussfall ein Überstromgenerator (14) zuschaltbar ist.

## Claims

1. Device for disconnecting loads and load groups operating in the standby mode when a short-circuit occurs on the load side of an invertor carrying out the standby power supply function, at least one circuit arrangement being provided for the selective disconnection of only the load or load group (8, 9, 10, 11) causing the short-circuit, which circuit arrangement contains the following components:
- a detector (12) for detecting the short-circuit
- a switching means (6, 61, 53; 14) which produces an increase in current and
- an isolating device (81, 91, 101, 11), which responds to the increase in current, for disconnecting the load caused [sic] the short-circuit or the load group having a short-circuit load, a transformer (5) which is provided on the output side of the invertor (4) being provided with a tap (53) for a lower voltage which can be connected and produces a high current in order to operate the isolating device (81, 91, 101, 111), characterized in that the detector (12) is located in the primary circuit of the transformer (5) and a relay (6) which can be energized by the detector (12) in the event of a short-circuit being connected via its make contact (61) or a thyristor circuit to the tap (53) for the lower voltage, or in that an overcurrent generator (14) can be connected by the detector (12) in the event of a short-circuit.

## Revendications

1. Dispositif pour débrancher des consommateurs ou des groupes de consommateurs se trouvant en régime de secours, lors de l'apparition d'un court-circuit sur le côté consommateur d'un onduleur assurant l'alimentation de secours, dans lequel, pour avoir une déconnexion sélective portant seulement sur le consommateur ou le groupe de consommateurs (8, 9, 10, 11) donnant lieu au court-circuit, on prévoit au moins une configuration de circuit qui contient les composants suivants :
- un détecteur (12) pour détecter le court-circuit,
- un organe de couplage produisant une élévation de l'intensité du courant (6, 61, 53;14), et
- un organe de coupure (81, 91, 101, 11) qui répond à l'élévation de l'intensité du courant, destiné à déconnecter le consommateur ayant provoqué le court-circuit ou encore le groupe de consommateurs contenant le consommateur court-circuité, où un transformateur (5) prévu sur le côté sortie de l'onduleur (4) est pourvu d'une prise (53), destinée à une basse tension raccordable, laquelle produit un courant d'intensité élevée pour actionner l'organe de coupure (81, 91, 101, 111),
caractérisé en ce que le détecteur (12) se trouve dans le circuit primaire du transformateur (5), et qu'un relais (6), pouvant, dans le cas d'un court-circuit, être excité par le détecteur (12), assure par l'intermédiaire de son contact de travail (61) ou d'un circuit à thyristors le raccordement de la prise (53) destinée à la basse tension, ou encore qu'un générateur de surintensité (14) peut, en cas de court-circuit être raccordé au détecteur (12).
